(19) Europäisches Patentamt
European Patent Office
Office européen des brevets

(11) **EP 4 353 368 A1**

(12) **EUROPEAN PATENT APPLICATION**

(43) Date of publication:
**17.04.2024 Bulletin 2024/16**

(21) Application number: **23198127.5**

(22) Date of filing: **19.09.2023**

(51) International Patent Classification (IPC):
**B05D 1/02** (2006.01) **B05D 5/02** (2006.01)
**H01M 4/04** (2006.01) **H01G 11/26** (2013.01)
**H01G 11/38** (2013.01) **H01G 11/86** (2013.01)
**B05D 1/26** (2006.01) **H01M 4/02** (2006.01)

(52) Cooperative Patent Classification (CPC):
**B05D 1/02; B05D 5/02; H01G 11/26; H01G 11/38;**
**H01G 11/86; H01M 4/0404; H01M 4/0419;**
B05D 1/26; B05D 2202/45; B05D 2252/02;
B05D 2490/60; H01M 2004/021

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **30.09.2022 JP 2022159102**

(71) Applicant: **FUJIFILM Corporation**
**Tokyo 106-8620 (JP)**

(72) Inventors:
• **KUNIYASU, Satoshi**
**Minami-ashigara, 250-0193 (JP)**
• **SAIKAWA, Tamotsu**
**Minami-ashigara, 250-0193 (JP)**

(74) Representative: **Meissner Bolte Partnerschaft**
**mbB**
**Widenmayerstraße 47**
**80538 München (DE)**

(54) **FILM FORMING METHOD**

(57) Provided is a film forming method with which a film that island portions with an area of 1 mm$^2$ or less per one island portion are scattered and fixed on a surface of a lower layer can be formed.

The film forming method is a method for forming a film in which island portions with an area of 0.0001 mm$^2$ to 1 mm$^2$ per one island portion are scattered and fixed on a surface of a lower layer at an area ratio of 20% to 80%, the film forming method including a step A of coating a base material with a first liquid containing at least a polymer using a slot die coater to form a first liquid film on a surface of the base material, a step B of superimposedly applying liquid droplets of a second liquid on the first liquid film to scatter liquid masses of the second liquid on a surface of the first liquid film, and a step C of drying the first liquid film and the liquid masses of the second liquid.

FIG. 1

EP 4 353 368 A1

**Description**

**BACKGROUND OF THE INVENTION**

1. Field of the Invention

The present disclosure relates to a film forming method.

2. Description of the Related Art

Conventionally, a method in which a coating liquid film to be a lower layer is coated with a coating liquid to be an upper layer before the coating liquid film is dried (also called a multi-layer coating method) has been known. In addition, in this method, a method of forming two or more laminated films using two kinds of coating units has also been known.

For example, JP2016-115577A discloses a method in which a first coated portion which is a precursor of a first layer is formed by a gravure coating method, and a second coated portion which is a precursor of a second layer is formed on a surface of the first coated portion by a die coating method.

**SUMMARY OF THE INVENTION**

There is a film in which small island portions with an area of 1 mm$^2$ or less per one island portion are scattered on a surface, and a sea-island structure is formed with a lower layer. In this film, the island portion can form, for example, minute protrusions on the surface of the lower layer. The island portion can be provided with a function of suppressing adhesion of the lower layer to another member, a function of protecting the lower layer or another member used adjacent to the lower layer, and the like. In order to impart the above-described functions, it is desirable that the island portion is fixed to the lower layer.

As in JP2016-115577A described above, the method in which a coating liquid film to be a lower layer is coated with a coating liquid to be an upper layer (that is, the multi-layer coating method) has been known, but regarding a film in which island portions with an area of 0.0001 mm$^2$ to 1 mm$^2$ per one island portion are scattered and fixed on a surface of the lower layer at an area ratio of 20% to 80% (hereinafter, also referred to as a specific sea-island structural film), a realistic forming method has not yet been established.

An object to be achieved by one aspect of the present disclosure is to provide a film forming method with which a film that island portions with an area of 1 mm$^2$ or less per one island portion are scattered and fixed on a surface of a lower layer can be formed.

The methods for achieving the above-described objects include the following aspects.

<1> A film forming method for forming a film which comprises a lower layer and island portions, each of which having an area of 0.0001 mm$^2$ to 1 mm$^2$, are scattered and fixed on a surface of the lower layer at 20% to 80% in terms of an area ratio calculated by the following Expression 1:

$$\text{Expression 1: Area occupied by island portions/Area of surface of low layer} \times 100,$$

the film forming method comprising:

a step A of coating a base material with a first liquid containing at least a polymer using a slot die coater to form a first liquid film on a surface of the base material;
a step B of superimposedly applying liquid droplets of a second liquid on the first liquid film to scatter liquid masses of the second liquid on a surface of the first liquid film; and
a step C of drying the first liquid film to form the lower layer and drying the liquid masses of the second liquid to form the island portions.

<2> The film forming method according to <1>,
in which the second liquid comprises particles.
<3> The film forming method according to <1> or <2>,
wherein the step B comprises superimposedly applying the liquid droplets of the second liquid from a spray coater onto the first liquid film.
<4> The film forming method according to <3>,

in which a flow rate of the second liquid in the spray coater is 5 mL/m$^2$ to 50 mL/m$^2$.
<5> The film forming method according to <3>,
in which a nozzle diameter of the spray coater is 0.1 mm to 0.5 mm.
<6> The film forming method according to <3>,
in which an air pressure in the spray coater is 0.05 MPa to 0.5 MPa.
<7> The film forming method according to any one of <1> to <6>,
wherein the step B comprises scattering liquid masses with an area of 0.0001 mm$^2$ to 1 mm$^2$ per one liquid mass on the surface of the first liquid film at 20% to 80% in terms of the area ratio.
<8> The film forming method according to any one of <1> to <7>,
further comprising forming an electrode film having, on its surface, a protective part composed of the island portions.

According to one aspect of the present disclosure, there is provided a film forming method with which a film that island portions with an area of 1 mm$^2$ or less per one island portion are scattered and fixed on a surface of a lower layer can be formed.

## BRIEF DESCRIPTION OF THE DRAWINGS

Fig. 1 is a schematic diagram of an example of the specific sea-island structural film viewed from above an island portion-formed surface side.
Fig. 2 is a schematic diagram of the example of the specific sea-island structural film viewed from a side.
Fig. 3 is a schematic diagram showing an example of each step of the film forming method according to the embodiment.

## DESCRIPTION OF THE PREFERRED EMBODIMENTS

Hereinafter, embodiments of the film forming method will be described. However, the present invention is not limited to the following embodiments, and can be implemented with appropriate modification within the scope of the object of the present invention.
In the present disclosure, the numerical ranges shown using "to" means ranges including the numerical values described before and after "to" as the minimum value and the maximum value.
Regarding numerical ranges that are described stepwise in the present disclosure, an upper limit value or a lower limit value described in a numerical range may be replaced with an upper limit value or a lower limit value of another stepwise numerical range. In addition, regarding the numerical range described in the present disclosure, an upper limit value or a lower limit value described in a numerical range may be replaced with a value described in Examples.
Each element in each drawing shown in the present disclosure is not necessarily an accurate scale, the main purpose is to clearly show the principle of the present disclosure, and some parts may be emphasized.
In addition, in each drawing, constitutional components having the same function are designated by the same reference numeral, and redundant description will be omitted.
In the present disclosure, the meaning of the term "step" includes not only an independent step but also a step whose intended purpose is achieved even in a case where the step is not clearly distinguished from other steps.
In the present disclosure, "first liquid film" refers to a film until drying is completed (for example, until a concentration of solid contents reaches 100% by mass), and a "film" refers to a film after the drying is completed.
In the present disclosure, "width direction" refers to a direction orthogonal to a longitudinal direction of any one of a long base material, a first liquid film, or a film.
In the present disclosure, a combination of two or more preferred forms or aspects is a more preferred form or aspect.

Film forming method

The film forming method according to the present embodiment is a method for forming a film in which island portions with an area of 0.0001 mm$^2$ to 1 mm$^2$ per one island portion are scattered and fixed on a surface of a lower layer at an area ratio of 20% to 80% (that is, the specific sea-island structural film), the film forming method including a step A of coating a base material with a first liquid containing at least a polymer using a slot die coater to form a first liquid film on a surface of the base material, a step B of superimposedly applying liquid droplets of a second liquid on the first liquid film to scatter liquid masses of the second liquid on a surface of the first liquid film, and a step C of drying the first liquid film and the liquid masses of the second liquid.

As a result of studies for forming the above-described specific sea-island structural film, the present inventors have found a method in which a first liquid film to be a lower layer is formed of a first liquid containing at least a polymer, fine liquid droplets of a second liquid for forming an island portion are superimposedly applied on the first liquid film before the first liquid film is dried to scatter liquid masses of the second liquid on a surface of the first liquid film, and then these are dried, which led to the invention.

By scattering the liquid masses of the second liquid on the first liquid film before the first liquid film is dried, the polymer contained in the first liquid film mixes the liquid masses of the second liquid, and then by drying the first liquid film and the liquid masses of the second liquid, a state in which island portions of the liquid masses of the second liquid are fixed to the lower layer. By adjusting each of an application area of the liquid droplets of the second liquid and a stacking method of the liquid droplets of the second liquid, the area per one island portion can be adjusted to the range of 0.0001 $mm^2$ to 1 $mm^2$, and the area ratio can be adjusted to 20% to 80%.

As described above, with the film forming method according to the present embodiment, the above-described specific sea-island structural film can be formed.

In the present disclosure, the fixing between the lower layer and the island portion is confirmed as follows.

According to JIS K 5600-5-6 (cross-cut method), a pressure-sensitive adhesive tape (Cellophane tape (registered trademark) No. 405, 24 mm width, manufactured by NICHIBAN Co., Ltd.) is attached over the island portion, and then the pressure-sensitive adhesive tape is pulled quickly in a vertical (90°) direction to be peeled off. At this time, in a case where a proportion of peeled island portions in a part or all parts is 20% by number or less, it is determined that the lower layer and the island portion are fixed to each other.

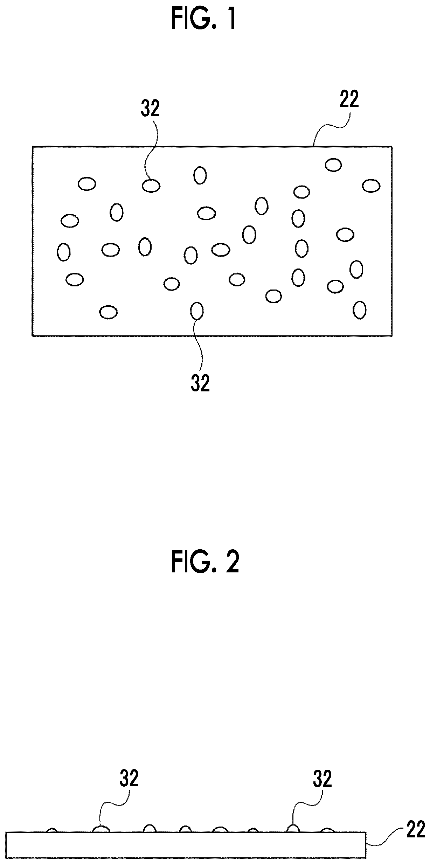

The specific sea-island structural film formed by the film forming method according to the present embodiment will be described with reference to Figs. 1 and 2. Here, Fig. 1 is a schematic diagram of an island portion-formed surface of the specific sea-island structural film viewed from above, and Fig. 2 is a schematic diagram of the specific sea-island structural film viewed from a side.

As shown in Fig. 1, the specific sea-island structural film includes a lower layer 22 and island portions 32 scattered and fixed to the lower layer 22. In this case, a region other than the island portions 32, that is, an exposed region on the surface of the lower layer 22 corresponds to a sea portion in the sea-island structure. As shown in Fig. 2, it is desirable that the island portion 32 is formed as a convex portion (that is, a protruding portion) with respect to the surface of the lower layer 22 in a case where the specific sea-island structural film is viewed from the side.

In Figs. 1 and 2, for the purpose of explaining the island portions, the island portions are emphasized, but in the film forming method according to the present embodiment, the island portions with an area of 0.0001 $mm^2$ to 1 $mm^2$ per one island portion are formed. The fact that the area per one island portion in the specific sea-island structural film is within the above-described range means that the island portion has a very small area. The area per one island portion may be appropriately selected depending on the use of the specific sea-island structural film. From the viewpoint of ease of formation, the area per one island portion is preferably 0.001 $mm^2$ to 0.1 $mm^2$.

In addition, the area ratio of the island portions is 20% to 80%. That is, in the specific sea-island structural film, it means that a large number of island portions having a small area (that is, 0.0001 $mm^2$ to 1 $mm^2$) are scattered on the lower layer so that the area ratio is within the above-described range. The area ratio of the island portions is a proportion of the island portions to a surface area of the lower layer.

In the specific sea-island structural film, for example, in a case where the area ratio of the island portions is 30%, it means that the exposed region (that is, the sea portion) of the surface of the lower layer is 70%. The area ratio of the island portions may be appropriately selected depending on the use of the specific sea-island structural film.

The area per one island portion and the area ratio are obtained by the following method.

First, a top view image of an island portion-formed surface of the specific sea-island structural film, which is a target to be measured, is obtained, for example, with an optical microscope. The image is binarized using an image processing software, and the area per one island portion, the area of the specific sea-island structural film (that is, an area of the surface of the lower layer, which is the sum of the area occupied by the island portions and the area of the exposed region of the lower layer), and the area occupied by the island portions are obtained.

The area per one island portion is obtained by arithmetically averaging the areas of any 10 island portions in the image.

Further, the area ratio is obtained by substituting two areas obtained as described above into the following Expression 1.

$$\text{Expression 1: (Area occupied by island portions/Area of specific sea-island structural}$$
$$\text{film)} \times 100$$

(That is, "(Area occupied by island portions/Area of surface of lower layer) $\times$ 100".)

Hereinafter, each step of the film forming method according to the present embodiment will be described.

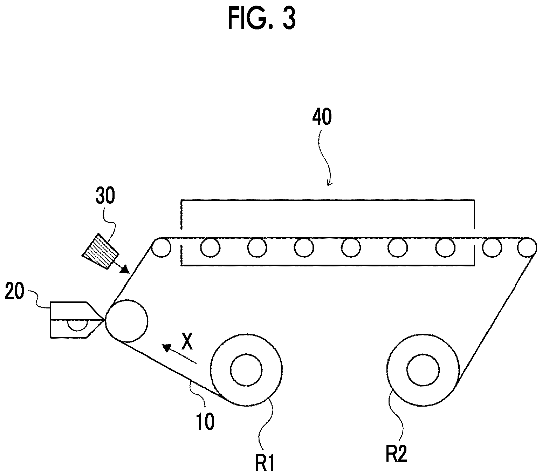

First, an example of the film forming method will be described with reference to Fig. 3. Fig. 3 is a schematic diagram showing an example of each step of the film forming method according to the embodiment.

As shown in Fig. 3, a distal end of a long base material 10 is sent out from a roll R1 wound in a roll shape, and continuous transport in a X direction is started. In a case where the continuously transported base material 10 reaches an installation position of the slot die coater 20, the slot die coater 20 coats the base material 10 with the first liquid containing at least a polymer. Accordingly, a first liquid film formed of the first liquid is formed on a surface of the long base material 10 (step A).

Subsequently, an applying unit 30 is used to superimposedly apply liquid droplets of the second liquid on the first liquid film formed on the long base material 10. Accordingly, liquid masses of the second liquid are scattered on the surface of the first liquid film (step B).

Subsequently, the base material 10 on which the first liquid film and the liquid masses of the second liquid are formed is continuously transported in a drying zone 40, and the first liquid film and the liquid masses of the second liquid are dried (step C). Accordingly, the specific sea-island structural film is obtained on the base material 10.

Subsequently, the base material 10 on which the specific sea-island structural film has been formed is wound into a roll shape, and a roll R2 obtained by a laminate of the specific sea-island structural film and the base material 10 is obtained.

Step A

In the step A, the base material is coated with the first liquid containing at least a polymer using a slot die coater to form a first liquid film on a surface of the base material.

-Base material-

The base material used in this step may be selected depending on the use of the specific sea-island structural film, and may also be selected in consideration of applicability to the continuous transport (preferably, applicability to a roll-to-roll method).

The base material may be applied to a desired use together with the specific sea-island structural film to be formed, or may be a temporary support for forming the specific sea-island structural film.

Examples of the base material include a resin film, a metal foil, and a laminate of the metal foil and the resin film.

The resin film may be a single-layer resin film or a laminated film in which two or more layers of resin films are laminated.

The resin film may be obtained as a commercially available product, or may be a resin film produced by a known film forming method.

Examples of the resin film include an acrylic resin film, a polycarbonate resin film, a polyolefin resin film, a polyester resin film, an acrylonitrile-butadiene styrene copolymer (ABS) film, and a triacetyl cellulose (TAC) film. In addition, a known resin film can also be used.

A surface of the resin film may optionally be subjected to an easy-adhesion treatment such as a corona discharge treatment by a known method.

Examples of the metal foil include metal foils made of copper, aluminum, silver, gold, or an alloy thereof. In addition, the metal foil may be a metal foil made of stainless steel, nickel, titanium, or an invar alloy.

The base material may be a laminate of the resin film and the metal foil described above.

In a case where the specific sea-island structural film is an electrode film and the lower layer is an electrode layer, which will be described later, as the base material, a metal material (that is, a current collector foil) such as a copper foil and an aluminum foil is preferably used.

A thickness of the base material may be appropriately set from the viewpoint of the use and the applicability to the continuous transport (preferably, the applicability to the roll-to-roll method).

The thickness of the base material may be set, for example, in a range of 5 $\mu$m to 100 $\mu$m.

In addition, a width and length of the base material may be appropriately set from the viewpoint of application to the roll-to-roll method and the width and length of the target specific sea-island structural film.

The thickness of the base material is measured as follows.

That is, using a contact-type thickness measuring device, thicknesses of the base material at three points in the width direction (that is, a position 5 mm from both edge portions in the width direction and a central part in the width direction) are measured at three points with an interval of 500 mm in the longitudinal direction.

The arithmetic average value of the nine measured values is obtained, and this is used as the thickness of the base material.

As the contact-type thickness measuring device, for example, S-2270 of Fujiwork Co., Ltd. is used.

In this step, a transportation speed of the continuously transported base material is not particularly limited.

As the transportation speed of the base material, for example, 0.1 m/min to 100 m/min can be selected, and 0.2 m/min to 20 m/min can be selected.

-First liquid-

The first liquid used in this step is not particularly limited as long as it is a liquid material containing at least a polymer and containing a solid content and a solvent (or a dispersion medium), which can form the desired lower layer.

In the present disclosure, the solid content means a component other than the solvent or the dispersion medium.

As the polymer contained in the first liquid, a known polymer called a binder polymer, a binder, or the like can be used.

The polymer contained in the first liquid may be appropriately determined according to the composition of the lower layer in the use of the specific sea-island structural film.

A content of the polymer contained in the first liquid is preferably 0.5% by mass or more, more preferably 0.5% by mass to 10% by mass, and still more preferably 1% by mass to 5% by mass with respect to the total solid content of the first liquid.

The first liquid preferably contains at least a solvent which dissolves the polymer, or at least a dispersion medium which disperses the polymer. The solvent or the dispersion medium may be an organic solvent, water, or a mixture thereof.

Examples of the solvent include known organic solvents.

Examples of the water include natural water, purified water, distilled water, ion-exchanged water, pure water, and ultrapure water (for example, Milli-Q water). The Milli-Q water is ultrapure water obtained by a Milli-Q water production apparatus manufactured by Merck KGaA.

The solid content contained in the first liquid, other than the polymer, includes a component for obtaining the desired lower layer, a component for improving coating suitability, and the like.

The first liquid may contain particles as one of the solid contents.

The particles are not particularly limited as long as they are granular substances, and may be inorganic particles, organic particles, or composite particles of an inorganic substance and an organic substance.

As the inorganic particles, known inorganic particles which can be applied to the desired lower layer can be used.

Examples of the inorganic particles include particles of a metal (alkali metal, alkaline earth metal, transition metal, or an alloy of these metals); particles of a semi-metal (silicon and the like); particles of a metal or semi-metal compound (oxide, hydroxide, nitride, and the like); and particles of a pigment containing carbon black and the like.

Examples of the inorganic particles also include particles of a mineral such as a mica; and particles of an inorganic pigment.

As the organic particles, known organic particles which can be applied to the desired lower layer can be used.

The organic particles are not particularly limited as long as they are particles of a solid organic substance, including resin particles and organic pigment particles.

Examples of the composite particles of an inorganic substance and an organic substance include composite particles in which inorganic particles are dispersed in an organic matrix; composite particles in which organic particles are coated with an inorganic substance; and composite particles in which inorganic particles are coated with an organic substance.

The particles may be surface-treated for the purpose of imparting dispersibility or the like.

The above-described composite particles may be formed as described above by being subjected to the surface treatment.

A particle size, specific gravity, form of use (for example, the presence or absence of the combined use), and the like of the particles are not particularly limited, and they may be appropriately selected according to the desired lower layer or the conditions suitable for forming the lower layer (for example, including applicability to the slot die coater).

In addition to the polymer and particles described above, examples of the solid content contained in the first liquid include components which contribute to dispersibility of the particles, polymerizable compounds, reactive components such as a polymerization initiator, components for improving coating performance, such as a surfactant, and other additives.

A concentration of solid contents in the first liquid may be any viscosity that can be applied to the slot die coater, and for example, it can be set in a range of 30% by mass to 70% by mass with respect to the total mass of the first liquid.

In addition, the viscosity of the first liquid at 25°C is preferably 0.1 Pa s to 1000 Pa s, and more preferably 1 Pa s to 100 Pa·s.

The viscosity of the first liquid is a value measured by a rotary viscometer (shear rate: 1 $s^{-1}$).

It is also preferable that the first liquid used in this step is a slurry containing an electrode active material and a conductive auxiliary agent (hereinafter, also referred to as a slurry for an electrode layer). By using the slurry containing an electrode active material and a conductive auxiliary agent, an electrode layer can be obtained as the lower layer.

The slurry for an electrode layer further contains a binder, a thickener, or the like, in addition to the electrode active material and the conductive auxiliary agent.

Examples of the electrode active material contained in the slurry include a negative electrode active material and a positive electrode active material.

Examples of the negative electrode active material and the positive electrode active material include a negative electrode active material and a positive electrode active material in a known lithium ion secondary battery.

Specific examples of the negative electrode active material include carbon materials such as graphite, hard carbon (non-graphitizable carbon), and soft carbon (easily graphitizable carbon); metal oxide materials such as silicon oxide, titanium oxide, vanadium oxide, and lithium-titanium composite oxide; and metal nitride materials such as lithium nitride, lithium-cobalt composite nitride, and lithium-nickel composite nitride.

Specifically, as the positive electrode active material, a lithium transition metal composite oxide containing a lithium element and a transition metal element is used. Examples of the lithium transition metal composite oxide include a lithium-nickel composite oxide (for example, $LiNiO_2$), and a lithium-nickel-cobalt-manganese composite oxide (for example, $LiNi_{1/3}Co_{1/3}Mn_{1/3}O_2$).

Examples of the conductive auxiliary agent contained in the slurry include a known conductive auxiliary agent in a lithium ion secondary battery.

Specific examples of the conductive auxiliary agent include carbon materials such as carbon black (for example, acetylene black, ketjen black, furnace black, channel black, lamp black, thermal black, and the like), activated carbon, graphite, and carbon fiber.

Examples of the binder contained in the slurry include a known binder in a lithium ion secondary battery.

Specifically, as the binder, for example, polyvinylidene fluoride (PVDF), polytetrafluoroethylene (PTFE), styrene-butadiene rubber (SBR), or the like is used.

Further, various additives used in a known lithium ion secondary battery, such as a thickener of carboxymethyl cellulose (CMC), and a dispersant, may be added to the slurry.

In addition, a solvent contained in the slurry may be any dispersion medium which can disperse the electrode active material and the conductive auxiliary agent, and specific examples thereof include water and an organic solvent.

A concentration of solid contents of the slurry for an electrode layer is, for example, preferably 40% by mass to 80% by mass, and more preferably 50% by mass to 70% by mass.

-Film thickness of first liquid film-

A film thickness of the first liquid film formed in this step is not particularly limited, and may be appropriately determined depending on the desired lower layer.

The thickness of the first liquid film can be selected from, for example, 50 $\mu$m to 350 $\mu$m.

In a case where the first liquid for forming an electrode layer as the lower layer is used, the thickness of the first liquid film is preferably 30 $\mu$m to 100 $\mu$m, and more preferably 50 $\mu$m to 80 $\mu$m.

The thickness of the first liquid film is measured as follows.

That is, with the first liquid film, thicknesses are measured at three points along the width direction (that is, a position 5 mm from both edge portions in the width direction and a central part in the width direction) using an optical interference-type thickness measuring device (for example, infrared spectroscopic interference type film thickness meter SI-T80 of Keyence Corporation). The arithmetic average value of the measured values at the three points is obtained, and this is used as the thickness of the first liquid film.

-Coating with slot die coater-

A slot die coater (also referred to as an extrusion coater) is used for coating the first liquid in this step.

The slot die coater is one of pre-weighing type coaters.

Since the slot die coater can coat a thin film at a high speed as compared with other coaters, it is possible to form the first liquid film having the above-described thickness at a high speed.

Step B

In the step B, liquid droplets of a second liquid are superimposedly applied on the first liquid film to scatter liquid masses of the second liquid on a surface of the first liquid film.

The liquid masses of the second liquid, scattered on the surface of the first liquid film, are formed by superimposedly applying the liquid droplets of the second liquid on the first liquid film.

-Second liquid-

The second liquid used in this step is not particularly limited as long as it is a liquid material containing a solid content and a solvent or a dispersion medium, which can form the desired island portion.

From the viewpoint of facilitating the formation of the liquid masses of the second liquid on the surface of the first liquid film and viewpoint of facilitating the formation of island portions having a desired shape, the second liquid preferably contains particles as the solid content.

Examples of the particles contained in the second liquid include the same inorganic particles, organic particles, and composite particles as in the particles contained in the first liquid.

A particle size, specific gravity, form of use (for example, the presence or absence of the combined use), and the like of the particles contained in the second liquid are not particularly limited, and they may be appropriately selected according to the desired island portion.

The solid content contained in the second liquid, other than the particles, includes a component for obtaining the desired island portion, a component for improving coating suitability, and the like.

In addition to the particles, examples of the solid content contained in the second liquid include components which contribute to dispersibility of the particles, polymers which determine the shape of the island portion, polymerizable compounds, reactive components such as a polymerization initiator, components for improving coating performance, such as a surfactant, and other additives.

Examples of the solvent or the dispersion medium contained in the second liquid include the same known organic solvent and water as in the solvent or the dispersion medium contained in the first liquid.

A concentration of solid contents in the second liquid may be any viscosity that can be applied to the applying unit described later, and for example, it can be set in a range of 1% by mass to 50% by mass with respect to the total mass of the second liquid.

In addition, from the viewpoint of applicability to the applying unit, the viscosity of the second liquid at 25°C is preferably 0.001 Pa s to 0.1 Pa s, and more preferably 0.01 Pa s to 0.05 Pa s.

-Application of second liquid-

In this step, a size of the liquid mass of the second liquid, obtained by superimposedly applying the liquid droplets of the second liquid, is close to the area per one island portion. Therefore, in a case of superimposedly applying the liquid droplets of the second liquid, it is sufficient that liquid masses with an area of $0.0001 \ mm^2$ to $1 \ mm^2$ per one liquid mass are formed.

in addition, since the area ratio of the liquid masses of the second liquid are close to the area ratio of the island portions, it is sufficient that, in a case of superimposedly applying the liquid droplets of the second liquid, the liquid masses of the second liquid are formed at an area ratio of 20% to 80%.

That is, in the step B, it is preferable that, by superimposedly applying the liquid droplets of the second liquid on the first liquid film, liquid masses with an area of $0.0001 \ mm^2$ to $1 \ mm^2$ per one liquid mass are scattered on the surface of the first liquid film at an area ratio of 20% to 80%.

In addition, as the timing of applying the second liquid on the first liquid film in this step, from the viewpoint of forming a fixed state of the island portion to the lower layer, it is desirable that some solvent or dispersion medium remains in the first liquid film. Specifically, it is preferable to apply the second liquid on the first liquid film in a case where a concentration of solid contents of the first liquid film is the concentration of solid contents of the first liquid to 90% by mass (for example, preferably 40% by mass to 80% by mass).

-Applying unit-

The applying unit for applying the liquid droplets of the second liquid on the first liquid film is not particularly limited as long as the liquid droplets of the second liquid can be superimposedly applied.

Examples of the applying unit of the second liquid include units capable of dispersing and applying small liquid droplets on the first liquid film, such as a spray coater and an inkjet printing method. In particular, from the viewpoint of applicability to the continuously transported first liquid film and viewpoint of easy application of the second liquid containing particles, it is preferable to use a spray coater as the applying unit. That is, in this step, it is preferable to superimposedly applying the liquid droplets of the second liquid on the first liquid film using a spray coater. As the spray coater, a spray type is not particularly limited, but from the viewpoint of ease of forming the island portion, an air spray type spray coater is preferable.

Hereinafter, a method of applying the second liquid using the spray coater will be described.

It is preferable to set the conditions of the spray coater as follows so that the liquid masses with an area of $0.0001 \ mm^2$ to $1 \ mm^2$ per one liquid mass are scattered on the surface of the first liquid film at an area ratio of 20% to 80%.

A flow rate of the second liquid in the spray coater is preferably set to 5 mL/m$^2$ to 50 mL/m$^2$.

In addition, a nozzle diameter of the spray coater is preferably set to 0.1 mm to 0.5 mm.

Furthermore, an air pressure in the spray coater is preferably set to 0.05 MPa to 0.5 MPa.

The liquid amount of the second liquid, the nozzle diameter, and the air pressure in the spray coater are measured as follows.

The liquid amount of the second liquid in the spray coater is measured with regard to a liquid amount of the second liquid supplied to the nozzle, using a Corioils flow meter.

The nozzle diameter of the spray coater is measured by observing an opening portion at the distal end of the nozzle with an optical microscope.

The air pressure in the spray coater is measured with a gas pressure sensor with regard to an air pressure of air immediately being put into the nozzle.

Step C

In the step C, the first liquid film and the liquid masses of the second liquid are dried.

In this step, by drying the first liquid film and the liquid masses of the second liquid, the lower layer is formed from the first liquid film, and the island portions are formed from the liquid masses of the second liquid, thereby obtaining the specific sea-island structural film.

-Drying unit-

A drying unit for drying the first liquid film and the liquid masses of the second liquid is not particularly limited as long as the desired lower layer and island portion are formed.

Examples of the drying unit for drying the first liquid film and the liquid masses of the second liquid include an oven, a hot air blower, and an infrared (IR) heater.

-Drying conditions-

Drying conditions for drying the first liquid film and the liquid masses of the second liquid are not particularly limited as long as the desired lower layer and island portion are formed.

As described above, the specific sea-island structural film is formed on the base material through each of the steps.

Other steps

If necessary, other steps may be provided at least one of before the step A or after the step C.

Examples of the other steps include a pretreatment step performed before coating the base material with the first liquid in the step A, and a posttreatment step performed on the formed specific sea-island structural film according to the use of the specific sea-island structural film.

Specific examples of the other steps include a step of surface-treating the base material, a step of curing the specific sea-island structural film, a step of compressing the specific sea-island structural film, and a step of peeling off the base material from the specific sea-island structural film.

Use

Examples of the use of the specific sea-island structural film include an electrode film having a protective part composed of the island portions on its surface, an optical film having an adhesion preventing part composed of the island portions on its surface, and an agricultural film having a light scattering part composed of the island portions on its surface.

The electrode film having a protective part composed of the island portions on its surface includes a protective part composed of the island portion, and an electrode layer to which the protective part is fixed. Such an electrode film is laminated on a separator through the protective part composed of the island portion. Since the protective part does not completely cover the surface of the electrode layer, while maintaining ionic conductivity, it is possible to suppress migration of components (for example, the conductive auxiliary agent and the like) which are not desired to migrate from the electrode layer to the separator.

In addition, the area ratio of the protective part can be set in a range of 20% to 80%. Therefore, the area ratio of the protective part and the area per one protective part may be adjusted in accordance with an opening ratio and opening diameter of the separator. Examples

Hereinafter, the present invention will be described in detail with reference to Examples. The materials, the amounts of materials to be used, the proportions, the details of each step, or the like shown in the examples below may be modified appropriately as long as the modifications do not depart from the spirit of the present invention. Therefore, the scope of the present invention is not limited to the specific examples described below.

All "part" are based on mass.

Preparation of base material

A copper base material (thermal conductivity: 400 W/m K and Young's modulus: 129.8 GPa) having a width of 200 mm, a thickness of 12 $\mu$m, and a length of 300 m was prepared.

Preparation of first liquid

Preparation of slurry for electrode layer

Natural graphite (C) as a negative electrode active material, styrene-butadiene rubber (SBR) as a binder, and carboxymethyl cellulose (CMC) as a thickener were weighed such that the mass ratio was C:SBR:CMC = 98:1:1, and mixed with ion-exchanged water as a solvent to prepare a slurry for a negative electrode layer.

A concentration of solid contents of the slurry for an electrode layer was 50% by mass, and a viscosity at 25°C was 12 Pa s.

Preparation of first liquid for forming hardcoat layer

100 parts by mass of cyclohexanone, 750 parts by mass of a partially caprolactone-modified polyfunctional acrylate (DPCA-20, manufactured by Nippon Kayaku Co., Ltd.), 200 parts by mass of silica sol (MIBK-ST, manufactured by Nissan Chemical Corporation), and 50 parts by mass of a photopolymerization initiator (IRGACURE 184, manufactured by BASF) were added to 900 parts by mass of methyl ethyl ketone, and the mixture was stirred. The mixture was filtered through a polypropylene filter having a pore diameter of 0.4 $\mu$m, thereby preparing a first liquid for forming a hardcoat layer (photocurable coating liquid).

A concentration of solid contents of the first liquid for forming a hardcoat layer was 50% by mass, and a viscosity at 25°C was 0.01 Pa s.

Preparation of second liquid

Preparation of second liquid for forming protective part

9 parts by mass of silica particles (Seahostar KE-P50, average particle diameter: 0.5 $\mu$m, manufactured by NIPPON SHOKUBAI CO., LTD.) and 1 part by mass of carboxymethyl cellulose (CMC) were added to 90 parts by mass of pure water to prepare a second liquid for forming a protective part.

A concentration of solid contents of the second liquid for forming a protective part was 10% by mass, and a viscosity at 25°C was 0.03 Pa s.

Preparation of second liquid for forming anti-blocking layer

9 parts by mass of crosslinked acrylic particles (MX-80H3wT, average particle diameter: 0.8 $\mu$m, manufactured by Soken Chemical & Engineering Co., Ltd.) and 1 part by mass of cellulose acetate butyrate (CAB) were added to 90 parts by mass of methyl ethyl ketone to prepare a second liquid for forming an anti-blocking layer.

A concentration of solid contents of the second liquid for forming an anti-blocking layer was 10% by mass, and a viscosity at 25°C was 0.005 Pa s.

Example A1

An electrode film having a protective part on the surface was obtained with the apparatus configured as shown in Fig. 3.

Specifically, a continuously transported base material (the copper base material described above) was coated with the slurry for an electrode layer using a slot die coater to obtain a first liquid film having a thickness of 50 $\mu$m (step A).

Subsequently, in a case where the concentration of solid contents of the first liquid film was 50% by mass, liquid droplets of the second liquid for forming a protective part was superimposedly applied thereon using a spray coater (step B). Accordingly, liquid masses with an area of 0.01 mm$^2$ per one liquid mass were scattered on the surface of the first liquid film at an area ratio of 50%. Conditions for the spray coater are summarized in Table 1 below.

Next, the first liquid film and the liquid masses of the second liquid were dried in a drying zone.

Through each of the steps as described above, an electrode film composed of the electrode layer which was the lower layer and the protective part which was the island portion was formed on the base material.

Examples A2 to A8

An electrode film composed of the electrode layer which was the lower layer and the protective part which was the island portion was formed on the base material in the same manner as in Example A1, except that, in Example A1, various conditions for the spray coater in the step B were appropriately changed as shown in Table 1 below, and the area per one second liquid mass and the area ratio were changed as appropriate.

Measurements of area per one island portion and area ratio

With regard to the obtained electrode film, the area per one island portion and the area ratio were measured by the methods described above. The results are shown in Table 1.

Table 1

| | Step A | Step B | | | | | | | | Island portion | | |
|---|---|---|---|---|---|---|---|---|---|---|---|---|
| | | | | Spray coater condition | | | Liquid mass of second liquid | | | | | |
| | Thickness of first liquid film [μm] | Applying unit of second liquid | Concentration of solid contents of first liquid film during applying second liquid [% by mass] | Liquid amount [mL/m²] | Nozzle diameter [mm] | Air pressure [MPa] | Area per one liquid mass [mm²] | Area ratio [%] | Area per one island portion [mm²] | Area ratio [%] | Presence or absence of fix to lower layer |
| Example A1 | 4 | Spray | 50 | 20 | 0.2 | 0.2 | 0.01 | 50 | 0.01 | 50 | Y |
| Example A2 | 4 | Spray | 80 | 20 | 0.2 | 0.2 | 0.01 | 50 | 0.01 | 50 | Y |
| Example A3 | 1 | Spray | 50 | 5 | 0.2 | 0.2 | 0.007 | 28 | 0.007 | 28 | Y |
| Example A4 | 10 | Spray | 50 | 50 | 0.2 | 0.2 | 0.9 | 77 | 0.9 | 77 | Y |
| Example A5 | 1 | Spray | 50 | 20 | 0.1 | 0.2 | 0.0007 | 50 | 0.0007 | 75 | Y |
| Example A6 | 11 | Spray | 50 | 20 | 0.4 | 0.2 | 0.2 | 50 | 0.2 | 31 | Y |
| Example A7 | 9 | Spray | 50 | 20 | 0.2 | 0.05 | 0.8 | 50 | 0.05 | 40 | Y |
| Example A8 | 1 | Spray | 50 | 20 | 0.2 | 0.5 | 0.005 | 50 | 0.005 | 70 | Y |

As is clear from Table 1, according to the film forming method of Examples, in which the slurry for an electrode layer was used as the first liquid and the second liquid for forming a protective part was used as the second liquid, it was found that a film in which the island portions (protective part) with an area of 1 mm$^2$ or less per one island portion were scattered and fixed to the surface of the lower layer (electrode layer) was obtained.

Example B1

An optical film composed of a hardcoat layer which was the lower layer and an anti-blocking layer which was the island portion was formed on the base material in the same manner as in Example A1, except that, in Example A1, the slurry for an electrode layer was changed to the first liquid for forming a hardcoat layer, and the second liquid for forming a protective part was changed to the second liquid for forming an anti-blocking layer.

The optical film in Example B1 was a film in which the island portions with an area of 0.01 mm$^2$ per one island portion were scattered and fixed to the surface of the lower layer at an area ratio of 60%.

Explanation of References

> 10: long base material
> 20: slot die coater
> 22: lower layer
> 30: applying unit
> 32: island portion
> 40: drying zone
> R1: roll
> R2: roll
> X: transport direction of base material

**Claims**

1. A film forming method for forming a film which comprises a lower layer and island portions, each of which having an area of 0.0001 mm$^2$ to 1 mm$^2$, are scattered and fixed on a surface of the lower layer at 20% to 80% in terms of an area ratio calculated by the following Expression 1:

$$\text{Expression 1: (Area occupied by island portions/Area of surface of low layer)} \times 100,$$

the film forming method comprising:

> a step A of coating a base material with a first liquid containing at least a polymer using a slot die coater to form a first liquid film on a surface of the base material;
> a step B of superimposedly applying liquid droplets of a second liquid on the first liquid film to scatter liquid masses of the second liquid on a surface of the first liquid film; and
> a step C of drying the first liquid film to form the lower layer and drying the liquid masses of the second liquid to form the island portions.

2. The film forming method according to claim 1,
wherein the second liquid comprises particles.

3. The film forming method according to claim 1 or 2,
wherein the step B comprises superimposedly applying the liquid droplets of the second liquid from a spray coater onto the first liquid film.

4. The film forming method according to claim 3,
wherein a flow rate of the second liquid in the spray coater is 5 mL/m$^2$ to 50 mL/m$^2$.

5. The film forming method according to claim 3 or 4,

wherein a nozzle diameter of the spray coater is 0.1 mm to 0.5 mm.

6. The film forming method according to any one of claims 3 to 5,
   wherein an air pressure in the spray coater is 0.05 MPa to 0.5 MPa.

7. The film forming method according to any one of claims 1 to 6,
   wherein the step B comprises scattering liquid masses with an area of 0.0001 $mm^2$ to 1 $mm^2$ per one liquid mass on the surface of the first liquid film at 20% to 80% in terms of the area ratio.

8. The film forming method according to any one of claims 1 to 7,
   further comprising forming an electrode film having, on its surface, a protective part composed of the island portions.

# FIG. 1

# FIG. 2

## FIG. 3

Europäisches Patentamt
European Patent Office
Office européen des brevets

# EUROPEAN SEARCH REPORT

Application Number

EP 23 19 8127

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 840 581 A1 (UNIV SAITAMA NAT UNIV CORP [JP]) 25 February 2015 (2015-02-25)<br>* paragraph [0012] – paragraph [0014] *<br>* paragraph [0023] – paragraph [0024] *<br>* paragraph [0032] – paragraph [0035] *<br>* paragraph [0046] – paragraph [0047] *<br>* paragraph [0073] *<br>* paragraph [0077] – paragraph [0079] *<br>* paragraph [0075] *<br>----- | 1-8 | INV.<br>B05D1/02<br>B05D5/02<br>H01M4/04<br>H01G11/26<br>H01G11/38<br>H01G11/86<br><br>ADD.<br>B05D1/26<br>H01M4/02 |
| X | EP 1 696 499 A1 (MATSUSHITA ELECTRIC IND CO LTD [JP]) 30 August 2006 (2006-08-30)<br>* paragraph [0007] – paragraph [0008] *<br>* paragraph [0017] – paragraph [0018] *<br>* paragraph [0027] – paragraph [0028] *<br>* paragraph [0037] – paragraph [0038] *<br>* paragraph [0041] *<br>* paragraph [0063] *<br>* paragraph [0066] *<br>* paragraph [0071] – paragraph [0073] *<br>* paragraph [0079] *<br>* paragraph [0043] *<br>----- | 1-8 | |
| X | WO 2021/131313 A1 (PANASONIC INTELLECTUAL PROPERTY MANAGEME)<br>1 July 2021 (2021-07-01)<br>* abstract; figures 1,2 * | 1-8 | TECHNICAL FIELDS SEARCHED (IPC)<br><br>B05D<br>H01M<br>H01G |
| X,P | -& EP 4 084 117 A1 (PANASONIC IP MAN CO LTD [JP]) 2 November 2022 (2022-11-02)<br>* as translation *<br>* paragraph [0008] *<br>* paragraph [0013] – paragraph [0015] *<br>* paragraph [0021] – paragraph [0024] *<br>* paragraph [0031] – paragraph [0032] *<br>* paragraph [0045] – paragraph [0046] *<br>* paragraph [0050] – paragraph [0051] *<br>* paragraph [0053] *<br>* paragraph [0054] – paragraph [0055] *<br>* tables 1-3 *<br>----- | 1-8 | |

The present search report has been drawn up for all claims

| Place of search | Date of completion of the search | Examiner |
|---|---|---|
| The Hague | 28 February 2024 | Maxisch, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 353 368 A1**

## ANNEX TO THE EUROPEAN SEARCH REPORT
## ON EUROPEAN PATENT APPLICATION NO.

EP 23 19 8127

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2024

| Patent document cited in search report | | Publication date | Patent family member(s) | | Publication date |
|---|---|---|---|---|---|
| EP 2840581 | A1 | 25-02-2015 | EP 2840581 | A1 | 25-02-2015 |
| | | | JP 6214054 | B2 | 18-10-2017 |
| | | | JP WO2013157505 | A1 | 21-12-2015 |
| | | | KR 20140139006 | A | 04-12-2014 |
| | | | US 2015061458 | A1 | 05-03-2015 |
| | | | WO 2013157505 | A1 | 24-10-2013 |
| EP 1696499 | A1 | 30-08-2006 | CN 1816922 | A | 09-08-2006 |
| | | | EP 1696499 | A1 | 30-08-2006 |
| | | | EP 2466669 | A1 | 20-06-2012 |
| | | | JP 3953026 | B2 | 01-08-2007 |
| | | | JP 2005174792 | A | 30-06-2005 |
| | | | KR 20060030898 | A | 11-04-2006 |
| | | | US 2007072083 | A1 | 29-03-2007 |
| | | | WO 2005057691 | A1 | 23-06-2005 |
| WO 2021131313 | A1 | 01-07-2021 | CN 114846644 | A | 02-08-2022 |
| | | | EP 4084117 | A1 | 02-11-2022 |
| | | | JP WO2021131313 | A1 | 01-07-2021 |
| | | | US 2023029595 | A1 | 02-02-2023 |
| | | | WO 2021131313 | A1 | 01-07-2021 |
| EP 4084117 | A1 | 02-11-2022 | CN 114846644 | A | 02-08-2022 |
| | | | EP 4084117 | A1 | 02-11-2022 |
| | | | JP WO2021131313 | A1 | 01-07-2021 |
| | | | US 2023029595 | A1 | 02-02-2023 |
| | | | WO 2021131313 | A1 | 01-07-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016115577 A